# EUROPEAN PATENT SPECIFICATION

(11) **EP 3 424 752 B1**
(45) Date of publication and mention of the grant of the patent: **19.08.2020**
(21) Application number: 18180462.6
(22) Date of filing: 28.06.2018
(51) Int. Cl.: B60C 11/03, B60C 11/00, B60C 11/13, B60C 11/04

(54) **PNEUMATIC TIRE**
LUFTREIFEN
PNEUMATIQUE

(30) Priority: 04.07.2017 JP 2017131365
(43) Date of publication of application: 09.01.2019
(73) Proprietor: Sumitomo Rubber Industries, Ltd., Kobe-shi, Hyogo-ken (JP)
(72) Inventor: KAWAZU, Akari, Kobe-shi, Hyogo 651-0072 (JP)
(74) Representative: Manitz Finsterwald Patent- und Rechtsanwaltspartnerschaft mbB

(56) References cited:
- EP-A1- 1 586 466
- EP-A1- 2 990 225
- EP-A2- 0 872 361
- FR-A1- 2 797 417
- US-A1- 2007 000 590

## Description

### Technical Field

The present invention relates to a pneumatic tire improved in uneven wear of the tread portion.

### Background Art

In general, a contact patch of a pneumatic tire during straight running has a maximum ground contact length in the tire circumferential direction which occurs in the vicinity of the tire equator. During cornering, the position at which a maximum ground contact length occurs, shifts toward the tread edge on the outside of turn. Thus, the shape of the contact patch varies between straight running and cornering. Such variations have a problem with partial wear or uneven wear caused at a specific position of the tread portion.

A pneumatic tire in accordance with the preamble of claim 1 is known from document EP 2 990 225 A1.

### Summary of the Invention

It is therefore, an object of the present invention to provide a pneumatic tire in which uneven wear of the tread portion is prevented by reducing variations of the shape of the contact patch due to change in running conditions.

The object of the present invention is satisfied by a pneumatic tire in accordance with claim 1.

According to the present invention, a pneumatic tire comprises a tread portion defining a contact patch of the tire, wherein

in a 3-degree-camber-andgle ground contacting state of the tire in which the tire is mounted on a standard wheel rim and inflated to a standard pressure and contacted with a flat surface by loading a standard load and leaning toward a first direction in the tire axial direction at a camber angle of 3 degrees,
a position of the contact patch at which the maximum ground contact length in the tire circumferential direction of the contact patch occurs
is positioned at an axial distance in a range from 20 % to 30 % of a maximum axial width of the contact patch from the center position in the tire axial direction of the contact patch
toward the first direction.

The pneumatic tire may be provided in the tread portion with a belt comprising a radially outermost belt ply and a radially inner belt ply, and
the axial width of the radially outermost belt ply is not less than 0.60 times the maximum axial width of the contact patch.

The axial width of the radially outermost belt ply may be not less than 0.70 times the maximum axial width of the contact patch.

In a meridian section of the tire, the contour of the radially outer surface of the tread portion may be made up of arcs having different radii of curvature and including:
a crown arc extending across the tire equator and having a first radius TR1 of curvature being radially outwardly convex,
a middle arc positioned on each side in the tire axial direction of the crown arc so as to continue from the crown arc and having a second radius TR2 of curvature being radially outwardly convex, and
a shoulder arc positioned on the outside in the tire axial direction of each middle arc so as to continue from the middle arc and having a third radius TR3 of curvature being radially outwardly convex,
wherein the first radius TR1 of curvature, the second radius TR2 of curvature, and the third radius TR3 of curvature satisfy the following relationship: TR1 > TR2 > TR3.

The second radius TR2 of curvature may be 45 % to 60 % of the first radius TR1 of curvature, and
the third radius TR3 of curvature may be 15 % to 30 % of the first radius TR1 of curvature.

Therefore, in the present invention, as the position of the maximum ground contact length is arranged at the distance of 20 % to 30 % of the maximum axial width of the contact patch, the difference between the shape of the contact patch during straight running and that during cornering becomes small, and thereby uneven wear of the tread portion can be prevented. This is based on the inventor's findings that the shape of the contact patch of a pneumatic tire attached to an actual vehicle during typical cornering becomes near the shape of the contact patch in the 3-degree-camber-andgle ground contacting state of the tire.

### Definitions

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure and the standard load are the maximum air pressure and the maximum tire load for the tire specified by the same organization in the Air-pressure/Maximum-load Table or similar list.

For example, the standard wheel rim is the "standard rim" specified in JATMA, the "Measuring Rim" in ETRTO, the "Design Rim" in TRA or the like. The standard pressure is the "maximum air pressure" in JATMA, the "inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like. In case of passenger car tires, however, the standard pressure is uniformly defined by 180 kPa.

The tread edges 2t are the axial outermost edges of the contact patch of the tire which occurs under a normally inflated loaded condition when the camber angle of the tire is zero.

The normally inflated loaded condition is such that the tire mounted on the standard wheel rim and inflated to the standard pressure is contacted with a flat surface by loading the standard load at a camber angle of 0 degree (Hereinafter, this tire state is referred as the "0-degree-camber-angle ground contacting state").

In this application including specification and claims, various dimensions, positions and the like of the tire refer to those under a normally inflated unloaded condition of the tire unless otherwise noted.

The normally inflated unloaded condition is such that the tire is mounted on the standard wheel rim and inflate to the standard pressure but loaded with no tire load.

The tread width TW is the width measured under the normally inflated unloaded condition, as the axial distance between the tread edges 2t determined as above.

### Brief Description of the Drawings

Fig.1 is a cross sectional view of a pneumatic tire as an embodiment of present invention in its normally inflated unloaded condition.
Fig.2 is a developed view of the tread portion thereof.
Fig.3 is a schematic cross sectional view for explaining the contour of the tread portion.
Fig.4 and Fig.5 are foot prints of the pneumatic tire showing the shapes of the contact patch at the camber angle of 0 degree and at a camber angle of 3 degrees (namely, in the 3-degree-camber-andgle ground contacting state), respectively.

### Description of the Preferred Embodiments

The present invention is suitably applied to pneumatic tires for passenger cars. Thus, taking a pneumatic tire for passenger cars as example, an embodiment of the present invention will now be described in detail in conjunction with the accompanying drawings.

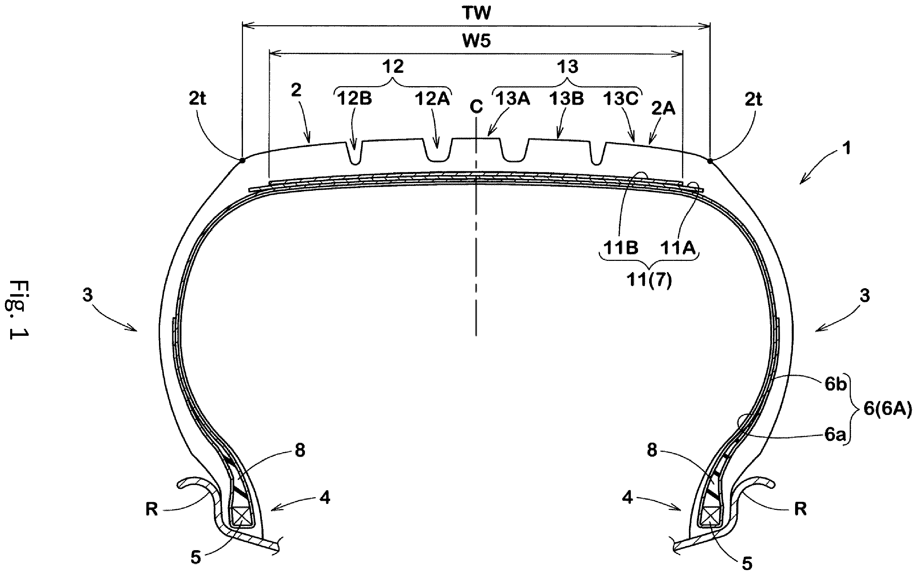

Fig.1 shows a pneumatic tire 1 as an embodiment of the present invention. In this embodiment, the tire 1 is designed as a radial tire for passenger cars.

As shown in Fig.1, the pneumatic tire 1 comprises a tread portion 2, a pair of axially spaced bead portions 4 each with a bead core 5 therein, a pair of sidewall portions 3 extending between the tread edges 2t and the bead portions 4, a carcass 6 extending between the bead portions 4, and a tread reinforcing belt 7 disposed radially outside the carcass 2 in the tread portion 2.

The carcass 6 comprises at least one ply 6A of cords.

In this embodiment, the carcass 6 is composed of a single ply 6A of cords arranged radially at an angle of from 75 to 90 degrees with respect to the tire circumferential direction, for example. For the carcass cords, for example, organic fiber cords such as aromatic polyamide, rayon and the like can be used.

In this embodiment, the carcass ply 6A extends between the bead portions 4 through the tread portion 2 and sidewall portions 3 and turned up around the bead core 5 in each bead portion 4 from the axially inside to the axially outside of the tire to form a pair of turnup portions 6b and a main portion 6a therebetween.

Between the main portion 6a and the turned up portion 6b of the carcass ply 6A, there is disposed a bead apex rubber 8 extending radially outwardly from the bead core 5.

The belt 7 comprises at least one belt ply of cords. In this embodiment, the belt 7 is composed of a radially inner belt ply 11A and a radially outermost belt ply 11B disposed thereon. In this example, the cords of the radially inner belt ply 11A are laid at an inclination angle of from 10 to 35 degrees with respect to the tire circumferential direction.

The cords of the radially outermost belt ply 11B are laid at an inclination angle of from 10 to 35 degrees with respect to the tire circumferential direction so as to cross the cords of the radially inner belt ply 11A.

For the belt cords, steel cords, aromatic polyamide cords, rayon cords and the like can be suitably used.

Incidentally, the belt 7 in this embodiment may be composed of three or more belt plies including the radially outermost belt ply 11B.

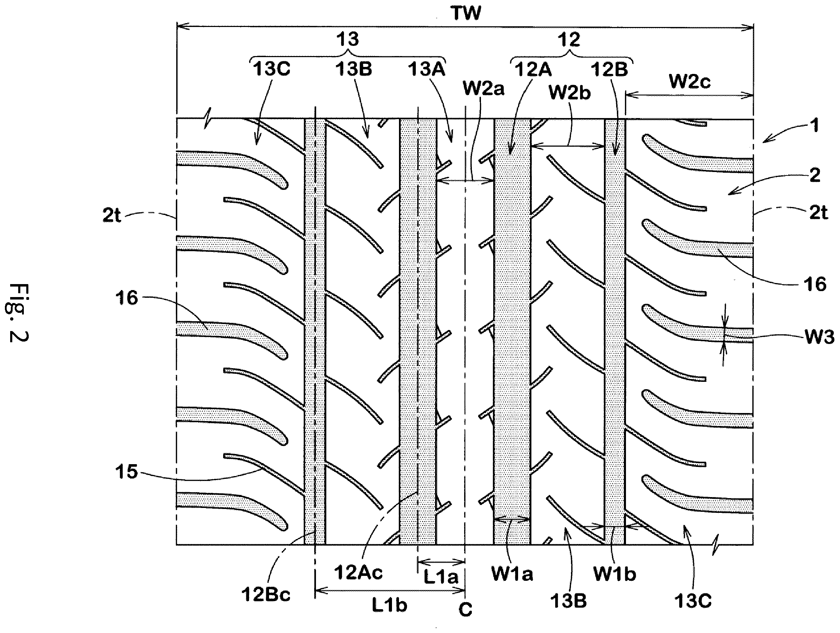

In this embodiment, as shown in Fig.2, the tread portion 2 is provided with a plurality of main grooves 12 extending continuously in the tire circumferential direction, and thereby the tread portion 2 is axially divided into a plurality of land regions 13.

The main grooves 12 include a pair of crown main grooves 12A and a pair of shoulder main grooves 12B.

In this embodiment, each of the crown main grooves 12A and the shoulder main grooves 12B is a straight groove.

The crown main grooves 12A are disposed one on each side of the tire equator C. The axial distance L1a from the tire equator C to the groove center line 12AC of each of the crown main grooves 12A is preferably set in a range from 8 % to 15 % of the tread width TW.

The shoulder main grooves 12B are disposed axially outside the respective crown main grooves 12A. The axial distance L1b from the tire equator C to the groove center line 12BC of the shoulder main groove 12B is preferably set in a range from 20 % to 35 % of the tread width TW.

As shown in Fig.2, the groove width W1a of each of the crown main grooves 12A and the groove width W1b of each of the shoulder main grooves 12B are, for example, set in a range from 3 % to 8 % of the tread width TW.

The groove depth of each of the crown main grooves 12A and the groove depth of each of the shoulder main grooves 12B are, for example, set in a range from 3 % to 7 % of the tread width TW.

The above-mentioned land regions 13 in this embodiment include: one crown land region 13A defined between the crown main grooves 12A, two middle land regions 13B defined between the crown main grooves 12A and the shoulder main grooves 12B, and two shoulder land regions 13C defined between the shoulder main grooves 12B and the tread edges 2t.

The crown land region 13A, the middle land regions 13B and the shoulder land regions 13C are each formed as a circumferentially continuous rib.

Here, the expression "circumferentially continuous rib" means that there is no groove extending across the entire width of the rib, wherein the groove does not include a sipe. This means that the rib may be provided with a sipe extending across the entire width of the rib.

The term "sipe" means a narrow groove having a width not more than 1.5 mm inclusive of a cut having no substantial width.

According to the present invention the maximum width w2a of the crown land region 13A, the maximum width w2b of each of the middle land regions 13B and the maximum width w2c of each of the shoulder land regions 13C are set in a range from 10 % to 16 % of the tread width TW.

The land regions 13A, 13B and 13C are provided with lateral grooves 16 and sipes 15.

The groove widths w3 of the lateral grooves 16 are, for example, set in a range from 3 % to 5 % of the tread width TW. The groove depths (not shown) of the lateral grooves 16 are, for example, set in a range from 3 % to 5 % of the tread width TW.

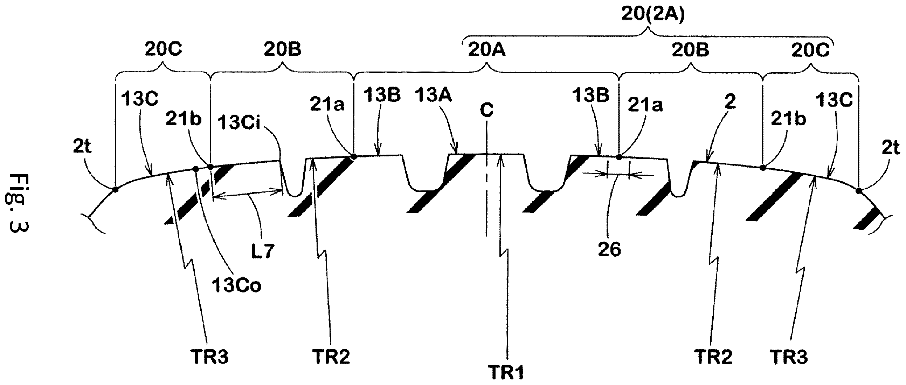

In a meridian section of the tire, as shown in Fig.3, the outer surface 2A of the tread portion 2 has a contour 20 made up of arcs having different radii of curvature. In this embodiment, the contour 20 is made up of a crown arc 20A, a pair of middle arcs 20B and a pair of shoulder arcs 20C.

The crown arc 20A extends across the tire equator C, and has a first radius TR1 of curvature being radially outwardly convex.

The middle arcs 20B are disposed one on each side of the crown arc 20A so as to continue from the crown arc 20A. The middle arc 20B has a second radius TR2 of curvature being radially outwardly convex.

In this embodiment, a first connecting point 21a, at which the crown arc 20A and each middle arc 20B are connected with each other, is positioned on the outer surface of the middle land region 13B.

The shoulder arcs 20C are disposed axially outside the respective middle arcs 20B so as to continue from the respective middle arcs 20B. The shoulder arc 20C has a third radius TR3 of curvature being radially outwardly convex.

In this embodiment, a second connecting point 21b, at which the middle arc 20B and the shoulder arc 20C are connected with each other, is positioned on the outer surface of the shoulder land region 13C.

In the contour 20 of the tread portion 2 in this embodiment, the first radius TR1 of curvature, the second radius TR2 of curvature and the third radius TR3 of curvature are different from one another.

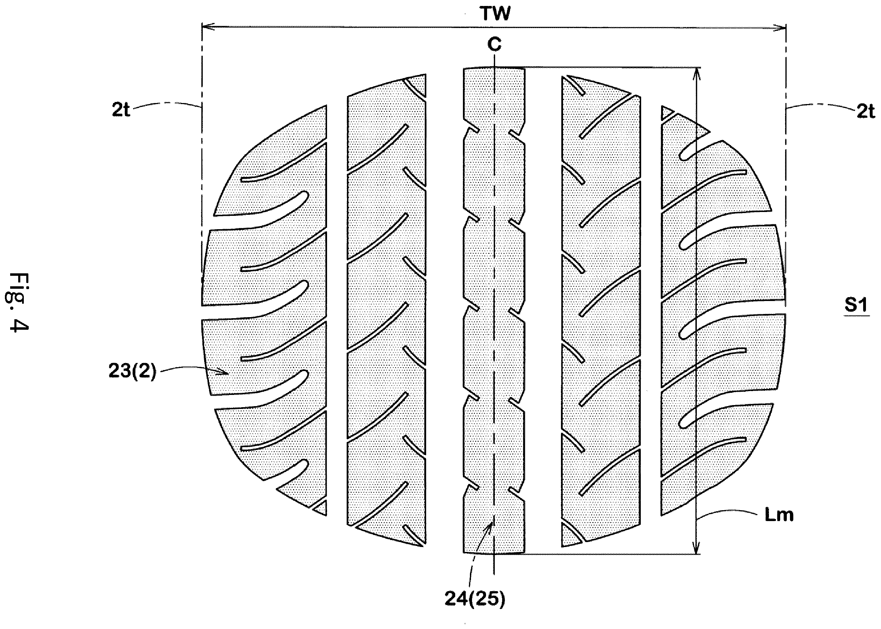

Fig.4 is the foot print of the tire showing the shape of the contact patch 23 of the tread portion 2 in the 0-degree-camber-angle ground contacting state of the tire in which the tire is mounted on the standard wheel rim and inflated to the standard pressure and contacted with a flat surface at a camber angle of 0 degree by loading the standard load. As shown, in this embodiment, the contact patch 23 has a maximum ground contact length Lm in the tire circumferential direction which occurs at a maximum ground contact length position 24 in the 0-degree-camber-angle ground contacting state.

The shape of the contact patch 23 in the 0-degree-camber-angle ground contacting state is substantially the same as the shape of the contact patch of the tire 1 attached to an actual vehicle during straight running.

The maximum ground contact length position 24 in the 0-degree-camber-angle ground contacting state exists in the vicinity of the tire equator C.

By the way, in the conventional tire, during cornering, the maximum ground contact length position shifts more than a little toward the tread edge 2t on the outside of turn (first direction S1). By the shift of the maximum ground contact length position, the shape of the contact patch during cornering is largely changed from that during straight running. Such change in the shape of the contact patch is liable to cause wear in a specific part of the tread portion (uneven wear).

The inventor found that the contact patch 23 of the tread portion 2 in the 3-degree-camber-andgle ground contacting state of the tire 1 in which the tire mounted on the standard wheel rim R and inflated to the standard pressure is contacted with a flat surface (not shown) by loading the standard load and inclining at a camber angle of 3 degrees toward a first direction S1 (shown in Fig.4) becomes near the contact patch of the tire 1 attached to a vehicle during typical cornering.

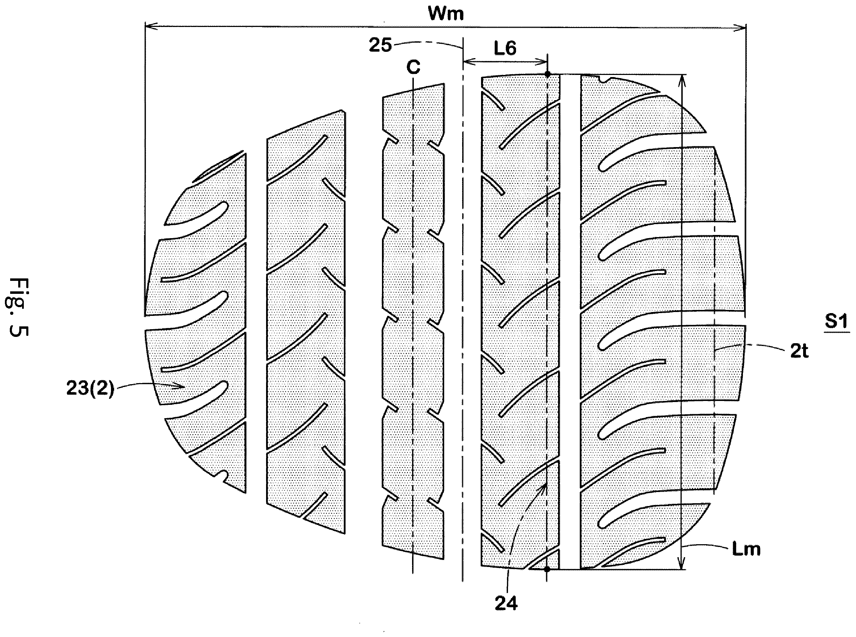

Fig.5 shows an example of the foot print of the tire showing the shape of the contact patch in the 3-degree-camber-andgle ground contacting state.

In the tire 1 in this embodiment, based on such findings, the maximum ground contact length position 24 in the 3-degree-camber-andgle ground contacting state is positioned at a distance L6 of from 20 % to 30 % of the maximum width wm in the tire axial direction of the contact patch 23 from the center position 25 in the tire axial direction of the contact patch 23 toward the first direction S1 in the tire axial direction. Such distance L6 is considerably reduced from a conventional range of from 45 % to 50 %.

As explained above, in the tire 1 in this embodiment, the maximum ground contact length position 24 during cornering shifts toward the inside in the tire axial direction from the tread edge 2t side, therefore the difference in the shape of the contact patch 23 between straight running and cornering can be reduced. Thereby, it is possible to prevent wear from concentrating in a specific position of the tread portion 2, and the uneven wear of the tread portion 2 is effectively prevented.

If the distance L6 of the maximum ground contact length position 24 during cornering is more than 30 % of the maximum width Wm of the contact patch 23, the change in the shape of the contact patch 23 can not be reduced.

If the distance L6 of the maximum ground contact length position 24 during cornering is less than 20 % of the maximum width Wm of the contact patch 23, there is a possibility that uneven wear occurs in the vicinity of the tire equator C.

Preferably, the distance L6 of the maximum ground contact length position 24 is set in a range of not more than 28 %, more preferably not less than 22 % of the maximum width Wm of the contact patch 23.

The maximum ground contact length position 24 in the 3-degree-camber-andgle ground contacting state can be changed into the above-mentioned range by changing the structure of the tire 1. In this embodiment, the first radius TR1 of curvature, the second radius TR2 of curvature and the third radius TR3 of curvature shown in Fig.3 are changed to satisfy the following relationship: TR1 > TR2 > TR3.

In the tire 1 in this embodiment satisfying the above relationship, the contour 20 of the tread portion 2 in a tire meridian section becomes more round as compared with a conventional tire 1 not satisfying the above relationship. Thereby, in the contact patch 23 in this embodiment (shown in Fig.5), the maximum width Wm of the contact patch 23 can be reduced in comparison with the contact patch of a conventional tire (not shown).

By the contact patch 23 having such narrow width, it is possible to position the maximum ground contact length position 24 of the tire 1 in this embodiment within the above range. In the tire 1 in this embodiment, as the change in the shape of the contact patch 23 between straight running and cornering is reduced, uneven wear of the tread portion 2 can be effectively prevented.

In order to reduce the change in the shape, the second radius TR2 of curvature is preferably set in a range from 45 % to 60 % of the first radius TR1 of curvature.

If the second radius TR2 of curvature becomes more than 60 % of the first radius TR1 of curvature, the contour 20 of the tread portion 2 can not be made sufficiently round, and thereby, the maximum ground contact length position 24 in the 3-degree-camber-andgle ground contacting state can not be positioned within the above-mentioned range, and the difference in the shape of the contact patch 23 between straight running and cornering can not be sufficiently reduced.

If the second radius TR2 of curvature is less than 45 % of the first radius TR1 of curvature, the contact patch 23 becomes too narrow, and the maximum ground contact length position 24 in the 3-degree-camber-andgle ground contacting state can not be positioned within the above-mentioned range, therefore, there is a possibility that uneven wear occurs in the vicinity of the tire equator C.

The second radius TR2 of curvature is preferably set in a range of not less than 50 % but not more than 55 % of the first radius TR1 of curvature.

From similar standpoints to the second radius TR2 of curvature, the third radius TR3 of curvature is preferably not less than 15 %, more preferably not less than 20 %, but preferably not more than 30 %, more preferably not more than 25 % of the first radius TR1 of curvature.

It is preferable that a first connecting point 21a at which the crown arc 20A and the middle arc 20B are connected with each other is positioned within a first region 26 which is defined as extending 2 mm toward the axially inside and also axially outside from the center position in the tire axial direction of the middle land region 13B.

Thereby, the contour 20 of the middle land region 13B can be rounded, and the maximum ground contact length position 24 in the 3-degree-camber-andgle ground contacting state can be positioned within the above-mentioned range.

Accordingly, in the tire 1 in this embodiment, the difference in the shape of the contact patch 23 between straight running and cornering can be reduced, and uneven wear of the tread portion 2 can be effectively prevented.

If the first connecting point 21a is positioned outside in the tire axial direction of the first region 26, the contour 20 of the tread portion 2 can not be sufficiently rounded, and there is a possibility that the difference in the shape of the contact patch 23 between straight running and cornering can not be sufficiently reduced.

If the first connecting point 21a is positioned inside in the tire axial direction of the first region 26, the contour 20 of the tread portion 2 becomes excessively rounded, and there is a possibility that uneven wear occurs in the vicinity of the tire equator C.

It is preferable that a second connecting point 21b at which the middle arc 20B and the shoulder arc 20C are connected with each other, is positioned inside in the tire axial direction of the center position in the tire axial direction 13Co of the shoulder land region 13C.

Thereby, as the contour 20 of the shoulder land region 13C can be rounded in an axially inner end 13Ci side of the shoulder land region 13C, the maximum ground contact length position 24 in the 3-degree-camber-andgle ground contacting state can be positioned within the above-mentioned range.

Accordingly, the tire 1 in this embodiment can reduce the difference in the shape of the contact patch 23 between straight running and cornering, and uneven wear of the tread portion 2 can be effectively prevented.

If the second connecting point 21b is positioned outside in the tire axial direction of the center position 13Co of the shoulder land region 13C, the contour 20 of the tread portion 2 can not be sufficiently rounded, and there is a possibility that the change in the shape of the contact patch 23 between straight running and cornering can not be sufficiently reduced. If the second connecting point 21b is positioned at the axially inner end 13Ci of the shoulder land region 13C, the contour 20 of the shoulder land region 13C becomes excessively rounded, and there is a possibility that uneven wear occurs in the vicinity of the tire equator C.

The axial distance L7 of the second connecting point 21b from the axially inner end 13Ci of the shoulder land region 13C is preferably not less than 3 mm, but preferably not more than 12 mm.

In order to effectively prevent uneven wear of the tread portion 2, it is preferred that the axial width W5 of the radially outermost belt ply 11B of the belt 7 is set in a range of not less than 0.60 times, preferably not less than 0.70 times the maximum width Wm of the contact patch 23 in the 3-degree-camber-andgle ground contacting state.

Such radially outermost belt ply 11B and the contour 20 of the tread portion 2 can produce a synergistic effect on reducing the change in the shape of the contact patch 23 between straight running and cornering, and uneven wear of the tread portion 2 can be effectively prevented.

It is preferred that the axial width w5 of the radially outermost belt ply 11B is determined according to the apparent aspect ratio of the tire as follows.

when the apparent aspect ratio of the tire is not less than 60 %, the axial width W5 of the radially outermost belt the ply 11B is preferably not less than 60 % of the maximum width Wm of the contact patch 23 in the 3-degree-camber-andgle ground contacting state.

when the apparent aspect ratio of the tire is not more than 55 % of the axial width W5 of the radially outermost belt the ply 11B is preferably not less than 70 % of the maximum width Wm of the contact patch 23.

By increasing the lower limit of the axial width w5 of the radially outermost belt ply 11B with decrease in the apparent aspect ratio of the tire, the tread portion 2 can be effectively restrained over a wide range toward the tread edges 2t, the change in the shape of the contact patch 23 between straight running and cornering can be effectively reduced. However, the axial width w5 of the radially outermost belt ply 11B is preferably set in a range of not more than 100 % of the maximum width wm of the contact patch 23 in order to prevent the weight of the tire from being undesirably increased.

while detailed description has been made of an especially preferable embodiment of the present invention, the present invention can be embodied in various forms without being limited to the illustrated embodiment.

### Comparison Tests

varying the distance L6 of the maximum ground contact length position 24 in the 3-degree-camber-andgle ground contacting state, the axial width W5 of the radially outermost belt ply and the contour of the tread portion (radii TR1, TR2 and TR3) as shown in Table 1, pneumatic radial tires of size 195/65R15 (rim size: 15x6.0J) having the internal structure shown in Fig.1 were experimentally manufactured as test tires (Ex1-Ex8 and Ref1 and Ref2), and tested for the uneven wear resistance.

Common specifications to the test tires are as follows.
Maximum axial width Wm of Contact patch 23 in 3-degree-camber-andgle ground contacting state: 350 mm
Position of First connecting point 21a: axial center position of middle land region 13B
Axial distance L7 of Second connecting point 21b: 5 mm
First radius TR1 of curvature of crown arc: 500 mm

### < Uneven wear resistance test >

The test tires were mounted on all of the four wheels of a test car (2000cc FF passenger car) and inflated to 230 kPa. After the test car run for 15000 km on paved roads (tire load 4.22 kN), the amount of wear was measured at the groove edges of each crown main groove as crown wear, and also at the groove edges of each shoulder main groove as shoulder wear. Such measurements were made for each of the four tires at eight substantially equiangular measuring positions around the tire. Then, the ratio of the averaged shoulder wear to the averaged crown wear was calculated.

The results are shown in Table 1. If the ratio is in the range from 0.95 to 1.15, uneven wear resistance is considered as excellent. The ratio of almost 1.00 is the best.

**Table 1**

| Tire | Ref1 | Ex1 | Ex2 | Ref2 | Ex3 | Ex4 | Ex5 | Ex6 | Ex7 | Ex8 |
|---|---|---|---|---|---|---|---|---|---|---|
| distance L6/Wm (%) | 10 | 20 | 30 | 40 | 20 | 20 | 30 | 30 | 30 | 30 |
| belt width W5/Wm (%) | 80 | 80 | 80 | 80 | 50 | 60 | 80 | 80 | 80 | 80 |
| TR2/TR1 (%) | 50 | 50 | 50 | 50 | 50 | 50 | 65 | 40 | 50 | 50 |
| TR3/TR1 (%) | 20 | 20 | 20 | 20 | 20 | 20 | 20 | 20 | 10 | 35 |
| uneven wear resistance (shoulder wear/crown wear) | 0.90 | 1.00 | 1.10 | 1.20 | 1.15 | 1.10 | 1.15 | 1.10 | 0.95 | 1.15 |

From the test results, it was confirmed that the tires according to the present invention were improved in the uneven wear.

### Reference Signs List

- 1: pneumatic tire
- 2: tread portion
- 23: contact patch
- 24: maximum ground contact length position
- Lm: maximum ground contact length

## Claims

1. A pneumatic tire (1) comprising a tread portion (2) defining a contact patch (23) of the tire, wherein
the tread portion (2) is axially divided by circumferentially continuously extending main grooves (12, 12A, 12B) into a central crown land region (13A), a pair of axially outer shoulder land regions (13C) and a pair of middle land regions (13B) therebetween,
**characterized in that**
a maximum width (w2a) of the crown land region (13A), a maximum width (W2b) of each of the middle land regions(13B), and a maximum width (W2c) of each of the shoulder land regions (13C) are in a range from 10 % to 16 % of the tread width (TW),
and
in a 3-degree-camber-angle ground contacting state of the tire (1) in which the tire (1) is mounted on a standard wheel rim and inflated to a standard pressure and contacted with a flat surface by loading a standard load and leaning toward a first direction (S1) in the tire axial direction at a camber angle of 3 degrees,
a position (24) of the contact patch (23) at which the maximum ground contact length (Lm) in the tire circumferential direction of the contact patch (23) occurs,
is positioned at an axial distance (L6) in a range from 20 % to 30 % of a maximum axial width (Wm) of the contact patch (23) from the center position (25) in the tire axial direction of the contact patch (23) toward the first direction (S1).

2. The pneumatic tire (1) according to claim 1, wherein
the tread portion (2) is provided with a belt (7) comprising a radially outermost belt ply (11B) and a radially inner belt ply (11A), and
the axial width (W5) of the radially outermost belt ply (11B) is not less than 0.60 times the maximum axial width (wm) of the contact patch (23) .

3. The pneumatic tire (1) according to claim 2, wherein
the axial width (W5) of the radially outermost belt ply (11B) is not less than 0.70 times the maximum axial width (Wm) of the contact patch (23).

4. The pneumatic tire (1) according to any one of claims 1-3, wherein
the contour (20) of the radially outer surface (2A) of the tread portion (2) in a meridian section of the tire is made up of arcs having different radii of curvature and including:
a crown arc (20A) extending across the tire equator (c) and having a first radius TR1 of curvature being radially outwardly convex,
a middle arc (20B) positioned on each side in the tire axial direction of the crown arc (20A) so as to continue from the crown arc (20A) and having a second radius TR2 of curvature being radially outwardly convex, and
a shoulder arc (20c) positioned on the outside in the tire axial direction of each middle arc (20B) so as to continue from the middle arc (20B) and having a third radius TR3 of curvature being radially outwardly convex,
wherein the first radius TR1 of curvature, the second radius TR2 of curvature, and the third radius TR3 of curvature satisfy the following relationship: TR1 > TR2 > TR3.

5. The pneumatic tire (1) according to claim 4, wherein
the second radius TR2 of curvature is 45 % to 60 % of the first radius TR1 of curvature, and the third radius TR3 of curvature is 15 % to 30 % of the first radius TR1 of curvature.

6. The pneumatic tire (1) according to claim 4, wherein
the tread portion (2) is axially divided by circumferentially continuously extending main grooves (12, 12A, 12B) into a central crown land region (13A), a pair of axially outer shoulder land regions (13C) and a pair of middle land regions (13B) therebetween, and
the maximum width (W2a) of the crown land region (13A), the maximum width (W2b) of each of the middle land regions (13B), and the maximum width (W2c) of each of the shoulder land regions (13C) are in a range from 10 % to 16 % of the tread width (TW).

7. The pneumatic tire (1) according to claim 6, wherein
on each side of the tire equator (c), a first connecting point (21a) at which the crown arc (20A) and the middle arc (20B) are connected with each other is positioned within a first region (26) which is defined as extending 2 mm toward the axially inside and also toward the axially outside from the center position in the tire axial direction of the middle land region (13B).

8. The pneumatic tire (1) according to claim 6 or 7, wherein
on each side of the tire equator (c), a second connecting point (21b) at which the middle arc (20B) and the shoulder arc (20c) are connected with each other, is positioned inside in the tire axial direction of the center position in the tire axial direction of the shoulder land region (13c).

9. The pneumatic tire (1) according to claim 8, wherein
the axial distance (L7) of the second connecting point (21b) from the axially inner end (13Ci) of said one of the shoulder land regions (13c) is not less than 3 mm and not more than 12 mm.

## Patentansprüche

1. Luftreifen (1) mit einem Laufflächenabschnitt (2), der eine Aufstandsfläche (23) des Reifens definiert, wobei
der Laufflächenabschnitt (2) axial durch sich in Umfangsrichtung kontinuierlich erstreckende Hauptrillen (12, 12A, 12B) in einen zentralen Kronenlandbereich (13A), ein Paar axial äußere Schulterlandbereiche (13C) und ein Paar dazwischen liegende mittlere Landbereiche (13B) unterteilt ist,
**dadurch gekennzeichnet, dass**
eine maximale Breite (W2a) des Kronenlandbereichs (13A), eine maximale Breite (W2b) jedes der mittleren Landbereiche (13B) und eine maximale Breite (W2c) jedes der Schulterlandbereiche (13C) in einem Bereich von 10 % bis 16 % der Laufflächenbreite (TW) liegen,
und
in einem Bodenkontaktzustand des Reifens (1) mit einem Sturzwinkel von 3 Grad, in dem der Reifen (1) auf eine Standardradfelge aufgezogen und auf einen Standarddruck aufgepumpt und mit einer flachen Oberfläche in Kontakt gebracht ist, indem er mit einer Standardlast belastet ist und in eine erste Richtung (S1) in der Reifenaxialrichtung mit einem Sturzwinkel von 3 Grad geneigt ist,
eine Position (24) der Aufstandsfläche (23), an der die maximale Bodenkontaktlänge (Lm) in der Reifenumfangsrichtung der Aufstandsfläche (23) auftritt, in einem axialen Abstand (L6) in einem Bereich von 20 % bis 30 % einer maximalen axialen Breite (Wm) der Aufstandsfläche (23) von der Mittelposition (25) in der Reifenaxialrichtung der Aufstandsfläche (23) in Richtung der ersten Richtung (S1) positioniert ist.

2. Luftreifen (1) nach Anspruch 1, wobei
der Laufflächenabschnitt (2) mit einem Gürtel (7) versehen ist, der eine radial äußerste Gürtellage (11B) und eine radial innere Gürtellage (11A) umfasst, und
die axiale Breite (W5) der radial äußersten Gürtellage (11B) nicht weniger als das 0,60-fache der maximalen axialen Breite (Wm) der Aufstandsfläche (23) beträgt.

3. Luftreifen (1) nach Anspruch 2, wobei die axiale Breite (W5) der radial äußersten Gürtellage (11B) nicht weniger als das 0,70-fache der maximalen axialen Breite (Wm) der Aufstandsfläche (23) beträgt.

4. Luftreifen (1) nach einem der Ansprüche 1-3, wobei
die Kontur (20) der radial äußeren Oberfläche (2A) des Laufflächenabschnitts (2) in einem Meridianschnitt des Reifens aus Bögen mit unterschiedlichen Krümmungsradien besteht und einschließt:
einem Kronenbogen (20A), der sich über den Reifenäquator (C) erstreckt und einen ersten Krümmungsradius TR1 aufweist, der radial nach außen konvex ist,
einem Mittelbogen (20B), der auf jeder Seite in der Reifenaxialrichtung des Kronenbogens (20A) so angeordnet ist, dass er sich von dem Kronenbogen (20A) fortsetzt, und der einen zweiten Krümmungsradius TR2 aufweist, der radial nach außen konvex ist, und
einen Schulterbogen (20C), der an der Außenseite in der Reifenaxialrichtung von jedem Mittelbogen (20B) so positioniert ist, dass er sich von dem Mittelbogen (20B) fortsetzt, und der einen dritten Krümmungsradius TR3 aufweist, der radial nach außen konvex ist,
wobei der erste Krümmungsradius TR1, der zweite Krümmungsradius TR2 und der dritte Krümmungsradius TR3 die folgende Beziehung erfüllen: TR1 > TR2 > TR3.

5. Luftreifen (1) nach Anspruch 4, wobei der zweite Krümmungsradius TR2 45 % bis 60 % des ersten Krümmungsradius TR1 beträgt und der dritte Krümmungsradius TR3 15 % bis 30 % des ersten Krümmungsradius TR1 beträgt.

6. Luftreifen (1) nach Anspruch 4, wobei
der Laufflächenabschnitt (2) axial durch sich in Umfangsrichtung kontinuierlich erstreckende Hauptrillen (12, 12A, 12B) in einen zentralen Kronenlandbereich (13A), ein Paar axial äußere Schulterlandbereiche (13C) und ein Paar dazwischen liegende mittlere Landbereiche (13B) unterteilt ist, und
die maximale Breite (W2a) des Kronenlandbereichs (13A), die maximale Breite (W2b) jedes der mittleren Landbereiche (13B) und die maximale Breite (W2c) jedes der Schulterlandbereiche (13C) in einem Bereich von 10 % bis 16 % der Laufflächenbreite (TW) liegen.

7. Luftreifen (1) nach Anspruch 6, wobei auf jeder Seite des Reifenäquators (C) ein erster Verbindungspunkt (21a), an dem der Kronenbogen (20A) und der Mittelbogen (20B) miteinander verbunden sind, innerhalb eines ersten Bereichs (26) positioniert ist, der so definiert ist, dass er sich von der Mittelposition in der Reifenaxialrichtung des mittleren Landbereichs (13B) um 2 mm in Richtung der axialen Innenseite und auch in Richtung der axialen Außenseite erstreckt.

8. Luftreifen (1) nach Anspruch 6 oder 7, wobei auf jeder Seite des Reifenäquators (C) ein zweiter Verbindungspunkt (21b), an dem der Mittelbogen (20B) und der Schulterbogen (20C) miteinander verbunden sind, in der Reifenaxialrichtung innen von der Mittelposition in der Reifenaxialrichtung des Schulterlandbereichs (13C) positioniert ist.

9. Luftreifen (1) nach Anspruch 8, wobei der axiale Abstand (L7) des zweiten Verbindungspunktes (21b) von dem axial inneren Ende (13Ci) des einen der Schulterlandbereiche (13C) nicht weniger als 3 mm und nicht mehr als 12 mm beträgt.

## Revendications

1. Bandage pneumatique (1) comprenant une portion formant bande de roulement (2) définissant une surface de contact (23) du pneumatique, dans lequel
la portion formant bande de roulement (2) est axialement divisée par des rainures principales s'étendant circonférentiellement en continu (12, 12A, 12B) en une région en relief de couronne centrale (13A), en une paire de régions en relief d'épaulement axialement extérieures (13C), et en une paire de régions en relief médianes (13B) entre les deux,
**caractérisé en ce que**
une largeur maximum (W2a) de la région en relief de couronne (13A), une largeur maximum (W2b) de chacune des régions en relief médianes (13B), et une largeur maximum (W2c) de chacune des régions en relief d'épaulement (13C) sont dans une plage allant de 10 % à 16 % de la largeur de roulement (TW),
et
dans un état de contact au sol du pneumatique (1) sous un angle de cambrure de 3 degrés dans lequel le pneumatique (1) est monté sur une jante de roue standard et est gonflé à une pression standard et est en contact avec une surface plate en chargeant une charge standard et en appui dans une première direction (S1) dans la direction axiale du pneumatique sous un angle de cambrure de 3 degrés,
une position (24) de la surface de contact (23), à laquelle la longueur de contact au sol maximum (Lm) dans la direction circonférentielle du pneumatique de la surface de contact (23) se produit,
est positionnée à une distance axiale (L6) dans une plage allant de 20 % à 30 % d'une largeur axiale maximum (Wm) de la surface de contact (23) depuis la position centrale (25) dans la direction axiale du pneumatique de la surface de contact (23) vers la première direction (S1).

2. Bandage pneumatique (1) selon la revendication 1, dans lequel
la portion formant bande de roulement (2) est dotée d'une ceinture (7) comprenant une nappe de ceinture radialement la plus à l'extérieur (11B) et une nappe de ceinture radialement intérieure (11A), et
la largeur axiale (W5) de la nappe de ceinture radialement la plus à l'extérieur (11B) n'est pas inférieure à 0,60 fois la largeur axiale maximum (Wm) de la surface de contact (23).

3. Bandage pneumatique (1) selon la revendication 2, dans lequel
la largeur axiale (W5) de la nappe de ceinture radialement la plus extérieur (11B) n'est pas inférieure à 0,70 fois la largeur axiale maximum (Wm) de la surface de contact (23).

4. Bandage pneumatique (1) selon l'une quelconque des revendications 1 à 3, dans lequel
le contour (20) de la surface radialement extérieure (2A) de la portion formant bande de roulement (2) dans une section méridienne du pneumatique est réalisé à partir d'arcs ayant des rayons de courbure différents et incluant :
un arc de couronne (20A) s'étendant à travers l'équateur de pneumatique (C) et ayant un premier rayon TR1 de courbure étant convexe radialement vers l'extérieur,
un arc médian (20B) positionné sur chaque côté dans la direction axiale du pneumatique de l'arc de couronne (20 A) de manière à continuer depuis l'arc de couronne (20A) et ayant un deuxième rayon TR2 de courbure étant convexe radialement vers l'extérieur, et
un arc d'épaulement (20C) positionné sur l'extérieur dans la direction axiale du pneumatique de chaque arc médian (20B) de manière à continuer depuis l'arc médian (20B) et ayant un troisième rayon TR3 de courbure étant convexe radialement vers l'extérieur,
dans lequel le premier rayon TR1 de courbure, le deuxième rayon TR2 de courbure et le troisième rayon TR3 de courbure satisfont la relation suivante : TR1 > TR2 > TR3.

5. Bandage pneumatique (1) selon la revendication 4, dans lequel
le deuxième rayon TR2 de courbure est de 45 % à 60 % du premier rayon TR1 de courbure, et le troisième rayon TR3 de courbure est de 15 % à 30 % du premier rayon TR1 de courbure.

6. Bandage pneumatique (1) selon la revendication 4, dans lequel
la portion formant bande de roulement (2) est axialement divisée par des rainures principales s'étendant circonférentiellement en continu (12, 12A, 12B) en une région en relief de couronne centrale (13A), en une paire de régions en relief d'épaulement axialement extérieures (13C) et en une paire de régions en relief médianes (13B) entre les deux, et
la largeur maximum (W2a) de la région en relief de couronne (13A), la largeur maximum (W2b) de chacune des régions en relief médianes (13B), et la largeur maximum (W2c) de chacune des régions en relief d'épaulement (13C) sont dans une plage allant de 10% à 16 % de la largeur de roulement (TW).

7. Bandage pneumatique (1) selon la revendication 6, dans lequel
sur chaque côté de l'équateur de pneumatique (C), un premier point de connexion (21a), au niveau duquel l'arc de couronne (20A) et l'arc médian (20B) sont connectés l'un à l'autre, est positionné à l'intérieur d'une première région (26) qui est définie comme s'étendant de 2 mm vers l'intérieur axialement et également vers l'extérieur axialement depuis la position centrale dans la direction axiale du pneumatique de la région en relief médiane (13B).

8. Bandage pneumatique (1) selon la revendication 6 ou 7, dans lequel sur chaque côté de l'équateur de pneumatique (C), un second point de connexion (21b), au niveau duquel l'arc médian (20B) et l'arc d'épaulement (20C) sont connectés l'un à l'autre, est positionné à l'intérieur dans la direction axiale du pneumatique de la position centrale dans la direction axiale du pneumatique de la région en relief d'épaulement (13C).

9. Bandage pneumatique (1) selon la revendication 8, dans lequel
la distance axiale (L7) du second point de connexion (21b) depuis l'extrémité axialement intérieure (13Ci) de ladite une des régions en relief d'épaulement (13C) n'est pas inférieure à 3 mm et n'est pas supérieure à 12 mm.
